# EUROPÄISCHE PATENTSCHRIFT

(11) **EP 2 175 618 B1**
(45) Veröffentlichungstag und Bekanntmachung des Hinweises auf die Patenterteilung: **19.06.2013**
(21) Anmeldenummer: 09450191.3
(22) Anmeldetag: 07.10.2009
(51) Int. Cl.: H04L 29/14, H04L 29/08, H04L 29/06

(54) **Verfahren sowie Anlage zur Verteilung von einlangenden Daten**
Procedure and installation for the distribution of input data
Procédé et installation pour la répartition de données entrantes

(30) Priorität: 09.10.2008 AT 15852008
(43) Veröffentlichungstag der Anmeldung: 14.04.2010
(73) Patentinhaber: Frequentis AG, 1100 Wien (AT)
(72) Erfinder: Markus Klopf, 3550 Langenlois (AT)
(74) Vertreter: Wildhack, Andreas

(56) Entgegenhaltungen:
- WO-A2-2004/012061
- US-A1- 2005 195 818
- US-A1- 2006 120 396

## Beschreibung

Die Erfindung betrifft ein Verfahren zur Verteilung von einlangenden Daten gemäß dem **Oberbegriff** des **Anspruches** 1 , sowie eine Anlage zur Verteilung solcher Daten gemäß dem **Oberbegriff** des **Anspruchs** 6. Derartige Verfahren und Anlagen werden in der Verkehrsleittechnik, insbesondere in Hochsicherheitsbereichen, wie z.B. der Luftverkehrsüberwachung, eingesetzt.
Als Daten im Sinne der gegenständlichen Erfindung werden luftfahrtsrelevante Daten bzw. Verkehrsdaten allgemeinster Art, insbesondere Positions- und Regelungsdaten, wie z.B. Höhe von Flugzeugen, Landefreigaben bzw. die Zuordnung zwischen Flugzeug und Controller angesehen. Ferner werden hierunter auch alle Daten verstanden, welche zur Abwicklung des Luftverkehrs zwischen Controllern und Piloten ausgetauscht werden, also auch Wetterdaten, topographische Daten, usw..
Als Fehlerzustand werden alle im Zuge der Abwicklung der Kommunikation auftretenden Störungen, Ausfälle und Fehlerfunktionen eines oder mehrerer Rechner angesehen. Hierunter fallen insbesondere Systemabstürze, wie Crash, Reboot oder Freeze.
Ein wesentliches Problem für die vorschriftsgemäße Funktionsweise von Vermittlungs- und Verteilungsanlagen für die genannten Daten besteht darin, dass schadhafte, beschädigte, verstümmelte, manipulierte oder verfälschte einlangende Verkehrsdaten an eine zentrale Verteilungsanlage gelangen und bei dieser Verteilungsanlage im Zuge der Weiterverarbeitung einen Fehlerzustand verursachen.
Typischerweise können derartige schadhafte Daten oder schädliche Daten durch eine Vielzahl von Fehlfunktionen der Sendevorrichtungen bzw. der Übermittlungsvorrichtungen sowie auch durch Schwachstellen im Sicherheitsbereich, etwa bei absichtlichen Attacken von Dritten, in das System gelangen. Der Regelfall schädlicher und schadhafter Daten besteht jedoch in Daten, welche durch Fehlfunktionen entstellt oder fehlerhaft erstellt worden sind.
Dieses Problem kann durch einfache Vervielfachung der Verarbeitungsanlagen bzw. der für die Verteilung betreffenden Server nicht behoben werden, da die einlangenden Daten an alle parallel angeordneten Server weitergeleitet werden und bei diesen annähernd zur gleichen Zeit ein Fehlerzustand auftritt. Auch die gegenseitige Überwachung der einzelnen Server ist in einem derartigen Fall nur bedingt zielführend, da die Fehlerzustände der einzelnen Server innerhalb eines engen Zeitbereichs liegen bzw. eintreten.
Eine Abhilfe gegen ein derartiges Problem wird durch unterschiedlich aufgebaute bzw. programmierte Server mit der selben Funktionalität bewerkstelligt, da mit hoher Wahrscheinlichkeit davon ausgegangen werden kann, dass beim Vorliegen von schadhaften Daten und deren Weiterverarbeitung in unterschiedlich aufgebauten Servern nicht an allen Servern der selbe Fehlerzustand auftritt. Die Mehrfachimplementierung sicherheitskritischer Serveranwendungen ist jedoch äußerst kostspielig, insbesondere personal- und zeitintensiv.
Die Erfindung setzt sich zur Aufgabe, die eingangs genannten Probleme zu überwinden und ein Verfahren sowie eine Anlage zur Verteilung einlangender Daten zu schaffen, welche die eingangs genannten Probleme lösen.
Die Erfindung löst diese Aufgabe mit dem **Kennzeichen** des **Anspruchs** 1 und dem **Kennzeichen** des **Anspruchs** 6. Erfindungsgemäß besteht der Vorteil, dass bei Fehlerzuständen des aktiven Servers den weiteren Servern ein vordefiniertes Zeitfenster zur Verfügung steht, innerhalb dessen ein Fehlerzustand der weiteren Server durch die verzögerte Datenweiterleitung wirksam vermieden bzw. verhindert werden kann. Durch diese Vorkehrung können während dieses Zeitfensters in den übrigen Servern Sicherheitsmaßnahmen zur Verhinderung von Fehlerzuständen des gesamten Systems ergriffen werden.
Eine besonders vorteilhafte Fehlerbehandlung wird durch die **Merkmale** der Ansprüche 2 und 7 ermöglicht. Nach der Übernahme der Funktion des aktiven Servers durch einen der weiteren Server funktioniert die Anlage ohne Einschränkungen weiter und ein Fehlerzustand der gesamten Anlage wird verhindert.
Mit dem **Merkmal** des **Anspruchs** 3 wird die Wiederaufnahme des Normalbetriebs ermöglicht. Bei der Übernahme der Verteilungsfunktion durch einen weiteren Server und Neustart bzw. der Wiederherstellung des als fehlerhaft arbeitend erkannten Servers wird der Zeitraum, innerhalb dessen die Anlage für die Clients nicht verfügbar ist, auf jenen Zeitraum begrenzt, welcher für die Detektion und das Umschalten zwischen zwei Servern benötigt wird. Die Umschaltzeiten sind relativ kurz bemessen und frei oder zufällig wählbar.
Mit den **Merkmalen** der **Ansprüche 4 und 11** wird eine Verteilung der einlangenden Verkehrsdaten auf Clients erzielt, bei der die Wiedergabe von schadhaften oder schädlichen Informationen an die Clients wirksam verhindert wird..
Mit den **Merkmalen** der **Ansprüche 5 und 13** wird eine sichere Erkennung von Fehlerzuständen bei rascher Abschaltung des aktiven Servers ermöglicht und gleichzeitig der Datenverlust gering gehalten.
Mit dem **Merkmal** des **Anspruchs** 8 wird eine gemeinsame Vorverarbeitung der einlangenden Daten für alle Server ermöglicht. Dadurch ergibt sich eine vereinfachte Anpassung einer erfindungsgemäßen Anlage an eine Vielzahl von unterschiedlichen Protokollen und Standards.
Eine Anlage gemäß **Anspruch 9** bietet erhöhte Absturzsicherheit durch Vervielfachung der Komponenten.
Eine Anlage gemäß **Anspruch 10** bietet einen besonders kompakten Aufbau und verhindert die Übertragung von schadhaften Daten an weitere Server.

Mit den **Merkmalen** des **Anspruchs 12** wird ein besonders kompakter Aufbau der erfindungsgemäßen Anlage durch Integration mehrerer Komponenten in einzelnen Servern erzielt. Durch diese bevorzugte Ausführungsform wird ein zur Überwachung benutzter Server festgelegt, welcher die Tätigkeit des jeweiligen aktiven Servers kontrolliert.

Die Zeichnung zeigt schematisch den Aufbau bzw. die Datenwege bei einer erfindungsgemäßen Anlage zu Verkehrsdatenverteilung gemäß der besten bekannten Ausführungsform.

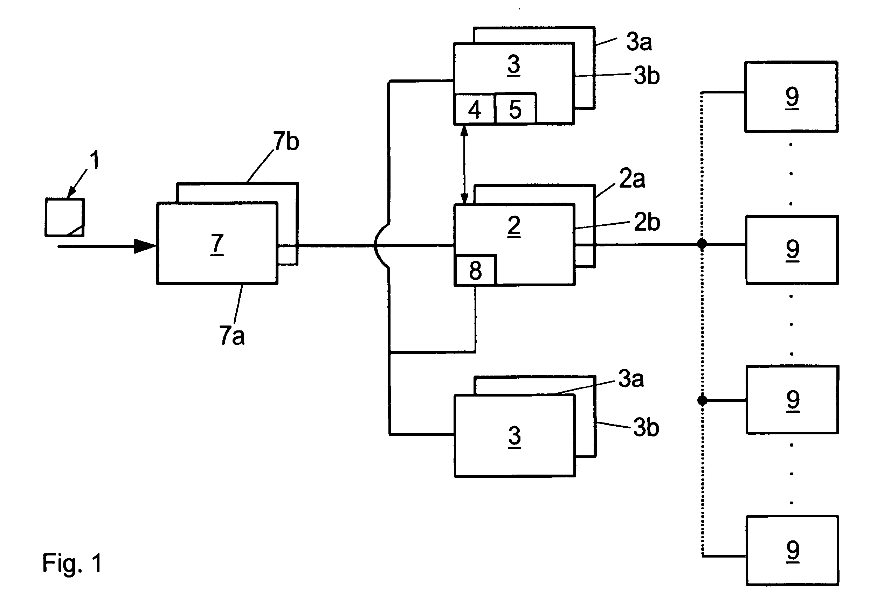

Die in der Fig. dargestellte Anlage umfasst einen aktiven Server 2 sowie zwei weitere Server 3. Dem aktiven Server 2 ist ein Interface Adapter 7 vorgeschaltet, in welchem einlangende Daten 1 vorverarbeitet werden. Einlangende Daten werden von externen Providern, beispielsweise einer Radar-Anlage, zur Verfügung gestellt. Mit dem Interface-Adapter 7 können gegebenenfalls Protokollkonversionen vorgenommen werden, um eine Kompatibilität der Servers mit den einlangenden Daten 1 zu gewährleisten. Als aktiv wird jeweils einer der Server 3 bezeichnet. Dieser ist der einzige Server, welcher mit den Clients in Kommunikation steht. Die weiteren Server erhalten die einlangenden Daten zeitversetzt und stehen in keiner Interaktion mit den Clients oder untereinander.
Die im Interface Adapter 7 vorverarbeiteten Daten 1 werden an den aktiven Server 2 weitergeleitet und von diesem allenfalls auf Anfrage an eine Vielzahl von Clients 9 verteilt. Sobald Daten 1 dem aktiven Server 2 zugeführt und in diesem abgespeichert sind, kann eine Abfrage dieser Daten durch die Clients 9 erfolgen. Die Verwendung eines Interface Adapters 7 ist nicht zwingend. Es kann der aktive Server 2 auch direkt von den einlangenden Daten 1 gespeist sein und/oder jeder Server einen eigenen Interface Adapter aufweisen.
Die im aktiven Server 2 einlangenden Daten werden nicht nur zur Abfrage durch die Clients 9 zur Verfügung gehalten, sondern auch an die Verzögerungseinheit 8 übermittelt, welche in dieser speziellen Ausführungsform im aktiven Server 2 vorgesehen ist. Selbstverständlich kann auch eine außerhalb des aktiven Servers, beispielsweise als eigenständige Komponente realisierte, Verzögerungseinheit 8 vorgesehen sein oder auch die Interface-Einheit 7 eine Verzögerungseinheit 8 und folglich zwei unterschiedliche Ausgänge für verzögert weitergeleitete und nicht verzögert weitergeleitete Daten 1 umfassen. Bei einer im aktiven Server 2 implementierten Verzögerungseinheit 8 besteht jedoch der Vorteil, dass schadhafte bzw. schädliche Daten 1, welche allenfalls den Fehlerzustand des aktiven Servers 2 verursachen, bei einem Neustart des aktiven Servers 2 jedenfalls gelöscht werden.
In der Verzögerungseinheit 8 wird die Weitergabe der Daten 1 für eine vorgegebene Zeitspanne bzw. Verzögerungszeit Δt verzögert. Dies bedeutet, dass am Ausgang der Verzögerungseinheit 8 die einlangenden Daten 1 mit einer vorgegebenen Verzögerungszeit Δt, insbesondere im Bereich zwischen 2 Sekunden und 15 Minuten, an den Ausgang abgegeben werden. Die Verzögerungszeit Δt kann auch durch einen adaptiven Mechanismus an die jeweilige System-Gegebenheiten angepasst werden.
Ferner kann jedoch zum Schutz der Clients 9 vor schadhaften oder schädlichen Daten 1 vorgesehen werden, dass die Daten 1 erst nach einer vorgegebenen Zeitspanne von den Clients 9 abgerufen werden können.
Die Verzögerungszeit Δt ist insbesondere unabhängig von der vorgegebenen Zeitspanne zwischen dem Einlangen der Daten 1 beim aktiven Server 2 und der Verfügbarkeit der Daten für die Clients 9, vorteilhafterweise wird die Verzögerungszeit Δt kürzer als diese Zeitspanne gewählt.
Der Ausgang der Verzögerungseinheit 8 ist an die Eingänge der weiteren Server 3 angeschlossen. Somit wird erreicht, dass die einlangenden Daten 1 allen weiteren Servern 3 nach einer vorgegebenen Verzögerungszeit Δt zugeführt werden. Für eine erfindungsgemäße Verfahrensführung ist jedoch lediglich ein weiterer Server 3 unbedingt erforderlich.
In der in Fig. 1 dargestellten Ausführungsform umfasst einer der weiteren Server 3 eine Fallback-Einheit 4 zur Erkennung eines Fehlerzustandes des aktiven Servers 2, sowie eine Aktivierungseinheit 5 zur Aktivschaltung eines der weiteren Server 3 als aktiver Server 2 im Falle eines Fehlerzustandes des aktiven Servers 2.
Die Fallback-Einheit 4 kann dabei als Abfrageeinheit ausgestaltet sein, welche in vorgegebenen Abständen, insbesondere innerhalb der vorgegebenen Verzögerungszeit Δt, Anfragen an den aktiven Server 2 stellt, wobei bei erfolgter Antwort des aktiven Servers 2 auf ordnungsgemäßen Betrieb geschlossen wird. Liegt hingegen beim aktiven Server 2 ein Fehlerzustand vor, kann dieser auf die Anfrage keine oder nur eine nicht protokollgemäße Antwort geben und ein Fehlerzustand wird erkannt. Für die Erkennung eines Fehlerzustandes kommen alle verfügbaren Erkennungssysteme und -verfahren in Betracht. Beispielsweise kann auch jeder Server 2, 3 über eine Erkennungseinheit verfügen, die im Falle eines Fehlerzustandes ein Signal an die Fallback-Einheit 4 abgibt. Vorteilhafterweise umfasst jeder Server eine derartige Fallback-Einheit 4.
Nach dem Erkennen des Fehlerzustandes des aktiven Servers 2 triggert die Fallback-Einheit 4 eine Aktivierungseinheit 5, welche einen der weiteren Server 3 aktiv schaltet, wodurch dieser nunmehr als aktiver Server 2 fungiert. Prinzipiell ist es irrelevant, welcher der weiteren Server 3 im Falle eines Fehlerzustandes des aktiven Servers 2 aktiviert wird. Wichtig ist jedoch, dass einer der weiteren Server 3 vorab dazu bestimmt ist. Es kann zu diesem Zweck in der jeweiligen Aktivierungseinheit 5 die Adresse des zu aktivierenden Servers in einem Speicher abgespeichert sein. Im Falle eines Fehlerzustandes des aktiven Servers 2 wird von der Aktivierungseinheit 5 derjenige weitere Server aktiviert, dessen Kennung oder Adresse in diesem Speicher abgespeichert ist.

Bei einer bevorzugten Ausführungsform liegt die Verzögerungszeit Δt zwischen 2 Sekunden und 15 Minuten. Eine Untergrenze für die Verzögerungszeit Δt im Sekundenbereich ist vorteilhaft, da in diesem Fall für die in einem weiteren Server 3 angesiedelte Fallback-Einheit 4 bzw. Aktivierungseinheit 5 ausreichend Zeit zur Verfügung steht, um den Absturz zu erkennen und gegebenenfalls einen weiteren Server 3 zu aktivieren. Eine Obergrenze im Bereich von mehreren Minuten ist dadurch begründet, dass der Datenverlust aufgrund eines Fehlerzustandes möglichst gering gehalten werden soll. Je nach Anwendungsfall kann hier eine Abwägung zwischen der Ausfallsicherheit und der Größe der vom Datenverlust betroffenen Datenmenge getroffen werden.

In einer bevorzugten Ausführungsform kann vorgesehen werden, dass auf allen Servern 2, 3 dieselbe Software abgespeichert ist. Es sind auf jedem Server 2, 3 Programme abgespeichert, welche die Funktion der Fallback-Einheit 4, der Aktivierungseinheit 5 und/oder der Verzögerungseinheit 8 implementieren. Weiters ist auf jedem Server eine Datenspeicherungseinheit zur Speicherung der Daten 1 auf dem Server sowie eine Datenverteilungseinheit zur Verteilung der Daten an die Clients 9, insbesondere auf Anfrage, per Broadcast oder per Multicast, vorgesehen, deren Funktion ebenfalls durch ein Programm implementiert ist.
Einer der Server der erfindungsgemäßen Anlage fungiert als aktiver Server 2 bzw. ist aktiv geschaltet. Auf diesem aktiven Server 2 laufen diejenigen Programme, welche die Funktion der Verzögerungseinheit 8, der Datenspeicherungseinheit sowie der Datenverteilungseinheit realisieren. Durch das Starten des jeweiligen Programms verfügt der aktive Server 2 somit über die besagten Einheiten bzw. Funktionalität.
Diejenigen Server, welche nicht als aktiver Server fungieren, werden als weitere Server 3 bezeichnet. Einer der weiteren Server 3 fungiert in der in der Fig. dargestellten Ausführungsform als Überwachungsserver. Auf diesem laufen diejenigen Programme, welche die Funktion der Fallback-Einheit 4, der Aktivierungseinheit 5 sowie der Datenspeicherungseinheit implementieren. Die Aktivierungseinheit 5 verfügt über einen Speicher, in dem die Adresse oder Kennung desjenigen weiteren Servers 3 abgespeichert ist, welcher im Falle eines Fehlerzustandes aktiviert werden soll.
Weitere Fallback-Einheiten 4, welche die Aktivierungseinheit 5 triggern, können auch in allen weiteren Servern 3 und insbesondere auch im aktiven Server 2 vorgesehen sein.

Die weiteren Server 3 verfügen über je eine Datenspeicherungseinheit und gegebenenfalls über eine Fallback-Einheit 4, deren Funktion durch ein auf dem weiteren Server 3 implementiertes Computerprogramm realisiert ist.

Es kann vorgesehen werden, dass im Falle eines Fehlerzustandes des aktiven Servers 2 der zuvor bestimmten Überwachungsserver aktiviert wird bzw. seine Funktion aufnimmt. Ein anderer der weiteren Server 3 übernimmt sodann die Rolle des Überwachungsservers. In diesem Fall wird bei dem nunmehr aktivierten Server das die Funktion der Aktivierungseinheit 5 implementierende Computerprogramm, gegebenenfalls auch das die Funktion der Fallback-Einheit 4 implementierende Computerprogramm, beendet, dafür aber werden die die Funktion der Verzögerungseinheit 8 sowie der Datenverteilungseinheit implementierenden Computerprogramme gestartet. Nach dem Start dieser Programme fungiert dieser Server als neuer aktiver Server 2.
Bei einem der weiteren Server 3, gegebenenfalls auch bei dem auf Grund eines Fehlerzustandes neu gestarteten Server, wird dasjenige Programm gestartet, welches die Aktivierungseinheit 5 implementiert. Falls auf dem Überwachungsserver keine Fallback-Einheit 4 implementiert wurde, wird ferner auch dasjenige Programme gestartet, welches die Fallback-Einheit 5 implementiert.

Besonders vorteilhaft ist die Ausführung des aktiven Servers 2, der weiteren Server 3 sowie des Interface-Adapters 7 jeweils als Vielzahl von gleich aufgebauten Einzeleinheiten, insbesondere Einzelservern 2a, 2b; 3a, 3b, sowie Einzel-Interfaceadaptern 7a, 7b. Damit wird erreicht, dass die Ausfallwahrscheinlichkeit auf Grund der Vervielfältigung reduziert wird.

Die Verzögerungseinheit 8, die Fallback-Einheit 4 und die Aktivierungseinheit 5 können alternativ als eigenständige Komponenten, angeschlossen an die Server 2, 3, vorgesehen sein.

## Patentansprüche

1. Verfahren zur Verteilung von einlangenden Daten (1), insbesondere Luftverkehrsdaten, über Server an zumindest einen Client (9), **dadurch gekennzeichnet , dass** die einlangenden Daten (1) sowohl einem aktiven Server (2) als auch mit einer vorgegebenen Zeitverzögerung (Δt) zumindest einem weiteren Server (3) zugeführt werden.

2. Verfahren nach Anspruch 1, **dadurch gekennzeichnet, dass** im Falle der Detektion eines Fehlerzustandes des aktiven Servers (2) der weitere Server (3) oder einer der weiteren Server (3) die Rolle eines aktiven Servers (2) übernimmt und diesem aktiv gewordenen Server (2) die einlangenden Daten (1) ab dem Zeitpunkt der Detektion verzögerungsfrei bzw. ohne Zeitverzögerung übermittelt werden.

3. Verfahren nach Anspruch 2, **dadurch gekennzeichnet , dass** der aktive Server (2) nach erkanntem Fehlerzustand und seiner Wiederherstellung oder seinem Neustart als weiterer Server (3) oder einer der weiteren Server (3) fungiert und die Daten (1) zeitverzögert zugeführt erhält.

4. Verfahren nach Anspruch 1 bis 3, **dadurch gekennzeichnet , dass** der zumindest eine Client (9) Daten (1) ausschließlich von dem jeweils aktiven Server (2) zugeführt erhält, welchem die einlangenden Daten (1) verzögerungsfrei zugeführt werden.

5. Verfahren nach einem der Ansprüche 1 bis 4, **dadurch gekennzeichnet, dass** eine Zeitverzögerung (At) zwischen 2 Sekunden und 15 Minuten gewählt wird und insbesondere frei vom Benutzer einstellbar oder nach Zufallskriterien variabel ist.

6. Anlage zur Verteilung einlangender Daten (1) an zumindest einen Client, **dadurch gekennzeichnet, dass**
a) die Anlage zumindest zwei Server (2, 3) umfasst, darunter einen aktiver Server (2), dem die einlangenden Daten (1) direkt zugeführt sind,
b) die Anlage eine Verzögerungseinheit (8) umfasst, welcher die einlangenden Daten (1) ebenfalls direkt zugeführt sind, und
c) die am Ausgang der Verzögerungseinheit (8) anliegenden Daten (1) den übrigen Servern (3) zugeführt sind.

7. Anlage nach Anspruch 6, **dadurch gekennzeichnet, dass**
a) die Anlage zumindest eine Fallback-Einheit (4) zur Erkennung eines Fehlerzustands des aktiven Servers (2) umfasst, und dass
b) die Anlage eine Aktivierungseinheit (5) zur Aktivschaltung eines der übrigen Server (3) als aktiven Server (2) nach Detektion eines Fehlerzustands des aktiven Servers (2) durch die Fallback-Einheit (4) umfasst.

8. Anlage nach einem der Ansprüche 6 oder 7, **gekennzeichnet durch** einen Interface-Adapter (7) zur Formatierung der einlangenden Daten (1), wobei der Ausgang des Interface-Adapters (7) an den aktiven Server (2) sowie an die Verzögerungseinheit (8) angeschlossen ist.

9. Anlage nach einem der Ansprüche 6 bis 8, **dadurch gekennzeichnet, dass** zumindest ein Server (2, 3), vorzugsweise jeder Server (2, 3), eine Vielzahl von, insbesondere gleich aufgebauten, Einzelservern (2a, 2b; 3a, 3b) umfasst, wobei vorzugsweise die einzelnen Server (2, 3) baugleich ausgebildet sind.

10. Anlage nach einem der Ansprüche 6 bis 9, **dadurch gekennzeichnet, dass** Computerprogramme, welche die Funktion der Verzögerungseinheit (8), der Fallback-Einheit (4) und/oder der Aktivierungseinheit (5) implementieren, auf allen Servern (2, 3) abgespeichert bzw. installiert sind, wobei
im Betrieb auf dem aktiven Server (2) die Funktion der Verzögerungseinheit (8) durch ein auf diesem aktiven Server (2) ablaufendes Computerprogramm verwirklicht ist, und
im Betrieb auf einem der weiteren Server (3) die Funktion der Aktivierungseinheit (5) und/oder der Fallback-Einheit (4) durch ein auf diesem weiteren Server (3) ablaufendes Computerprogramm verwirklicht ist.

11. Anlage nach einem der Ansprüche 6 bis 10 ferner umfassend zumindest einen Client (9), **dadurch gekennzeichnet, dass** der Client (9) zur Datenübertragung ausschließlich mit dem aktiven Server (2) verbunden ist.

12. Anlage nach einem der Ansprüche 6 bis 11, **dadurch gekennzeichnet, dass** die Fallback-Einheit (4) und die Aktivierungseinheit (5) in einem, insbesondere in demselben, weiteren Server (3) vorliegen bzw. verwirklicht sind, und die Anlage gegebenenfalls einen Speicher für eine Kennung oder Adresse des im Falle eines Fehlerzustands zu aktivierenden Servers (3) umfasst.

13. Anlage nach einem der Ansprüche 6 bis 12, **dadurch gekennzeichnet, dass** die Zeitverzögerung (At) zwischen 2 Sekunden und 15 Minuten liegt und insbesondere frei vom Benutzer einstellbar oder zufällig variabel ist.

## Claims

1. A method for distributing incoming data (1), in particular air-traffic data, via servers to at least one client (9), **characterised in that** the incoming data (1) is supplied both to an active server (2) and, with a predefined time lag (Δt), to at least one other server (3).

2. The method of claim 1, **characterised in that** if a fault of the active server (2) is detected, the other server (3) or one of the other servers (3) will assume the role of an active server (2) and thus the incoming data (1) will be transmitted to the newly active server (2) from the time of detection onwards free from delay and without a time lag.

3. The method of claim 2, **characterised in that** the active server (2), after its fault has been detected and after it has been recovered or restarted, will act as the other server (3) or as one of the other servers (3) and receive the data (1) after a time-lag.

4. The method of any one of claims 1 to 3, **characterised in that** the at least one client (9) receives data (1) exclusively from the respective active server (2) to which the incoming data (1) are supplied free from delay.

5. The method of any one of claims 1 to 4, **characterised in that** a time lag (Δt) between 2 seconds and 15 minutes is selected,which, in particular,is adjustable in a user-independent manner or variable according to random criteria.

6. An equipment for distributing incoming data (1) to at least one client, **characterised in that**
a) theequipment comprises at least two servers (2, 3), including an active server (2) to which the incoming data (1) is supplied directly,
b) theequipment comprises a delay unit (8), to which the incoming data (1) is also supplied directly, and
c) the data (1) present at the output of the delay unit (8) are supplied to the remaining servers (3).

7. The equipment of claim 6, **characterised in that**
a) theequipment comprises at least one fall-back unit (4) for recognising a fault in the active server (2), and **in that**
b) theequipment comprises an activating unit (5) for activating one of the remaining servers (3) to become the active server (2) after detection of a fault in the active server (2) by the fall-back unit (4).

8. The equipment of claim 6 or 7, **characterised by** an interface adaptor (7) for formatting the incoming data (1), wherein the output of the interface adaptor (7) is connected to the active server (2) as well as the delay unit (8).

9. The equipment of any one of claims 6 to 8, **characterised in that** at least one server (2, 3), preferably each server (2, 3) comprises a plurality of individual servers (2a, 2b; 3a, 3b) which, in particular, have the same setup, wherein preferably the individual servers (2, 3) are identical in construction.

10. The equipment of any one of claims 6 to 9, **characterised in that** computer programmes which implement the function of the delay unit (8), the fall-back unit (4) and/or the activating unit (5) are saved or installed on all servers (2, 3), wherein
during operation on the active server (2), the function of the delay unit (8) is implemented by a computer programme active on said active server (2), and
during operation on one of the other servers (3), the function of the activating unit (5) and/or the fall-back unit (4) is implemented by a computer programme active on said other server (3).

11. The equipment of any one of claims 6 to 10, further comprising at least one client (9) **characterised in that** the client (9) is exclusively connected to the active server (2) for data transmission.

12. The equipment of any one of claims 6 to 11, **characterised in that** the fall-back unit (4) and the activating unit (5) are present or implemented in one, in particular the same, other server (3), and **in that** the equipment optionally comprises a memory for an identifier or address of the server (3) that is to be activated in case of a fault.

13. The equipment of any one of claims 6 to 12, **characterised in that** the time lag (Δt) is between 2 seconds and 15 minutes, and is, in particular, adjustable in a user-independent manner or randomly variable.

## Revendications

1. Procédé pour distribuer des données (1) entrantes, notamment de données relatives au trafic aérien, à travers des serveurs à au moins un client (9), **caractérisé en ce que** les données (1) entrantes sont transmises et à un serveur actif (2) et, avec un décalage temporel prédéfini (Δt), à au moins un autre serveur (3).

2. Procédé selon la revendication 1, **caractérisé en ce que** dans le cas de la détection d'une erreur du serveur actif (2), l'autre serveur (3) ou l'un des autres serveurs (3) assument le rôle d'un serveur actif (2), les données (1) entrantes étant transmises à ce serveur (2) devenu actif à partir du moment de la détection, sans délai et sans décalage temporel.

3. Procédé selon la revendication 2, **caractérisée en ce que** après l'erreur détectée et sa restauration ou son redémarrage, le serveur actif (2) agit comme un autre serveur (3) ou l'un des autres serveurs (3) et reçoit les données (1) avec un décalage temporel.

4. Procédé selon les revendications 1 à 3, **caractérisé en ce que** l'au moins un client (9) reçoit les données (1) exclusivement à partir du serveur actif (2), auquel les données (1) entrantes sont transmises sans décalage temporel.

5. Procédé selon l'une des revendications 1 à 4, **caractérisé en ce que** un décalage temporel (Δt) entre 2 secondes et 15 minutes est choisi, celui-ci étant notamment réglable librement par l'utilisateur ou variable de façon aléatoire.

6. Installation pour distribuer des données (1) entrantes à au moins un client, **caractérisée en ce que**
a) l'installation comprend au moins deux serveurs (2, 3), dont un serveur actif (2) auquel les données (1) entrantes sont transmises directement,
b) l'installation comprend une unité (8) de décalage à laquelle les données (1) entrantes sont également transmises directement, et **en ce que**
c) les données (1) disposées à la sortie de l'unité (8) de décalage sont transmises aux autres serveurs (3).

7. Installation selon la revendication 6, **caractérisée en ce que**
a) l'installation comprend au moins une unité (4) de secours pour reconnaître une erreur du serveur actif (2), et **en ce que**
b) l'installation comprend une unité (5) d'activation pour activer l'un des autres serveurs (3) en tant que serveur actif (2) après la détection d'une erreur du serveur actif (2) par l'unité (4)de secours.

8. Installation selon l'une des revendications 6 ou 7, **caractérisée par** un adaptateur (7) d'interface pour formater les données (1) entrantes, la sortie de l'adaptateur (7) d'interface étant connectée au serveur actif (2) ainsi qu'à l'unité (8) de décalage.

9. Installation selon l'une des revendications 6 à 8, **caractérisée en ce que** au moins un serveur (2, 3), de préférence chaque serveur (2, 3), comporte une pluralité de serveurs individuels (2a, 2b ; 3a, 3b), notamment présentant la même configuration, les serveurs individuels (2, 3) étant de préférence de construction identique.

10. Installation selon l'une des revendications 6 à 9, **caractérisée en ce que** des programmes informatiques mettant en oeuvre la fonction de l'unité (8) de décalage, de l'unité (4) de secours et/ou de l'unité (5) d'activation sont sauvegardés ou installés sur tous les serveurs (2,3),
pendant le fonctionnement sur le serveur actif (2), la fonction de l'unité (8) de décalage étant réalisée par un programme informatique se déroulant sur ce serveur actif (2), et
pendant le fonctionnement sur l'un des autres serveurs (3), la fonction de l'unité (5) d'activation et/ou de l'unité (4) de secours étant réalisée par un programme informatique se déroulant sur cet autre serveur (3).

11. Installation selon l'une des revendications 6 à 10, comprenant de plus au moins un client (9), **caractérisée en ce que** au fin de la transmission des données le client (9) est connecté exclusivement avec le serveur actif (2).

12. Installation selon l'une des revendications 6 à 11, **caractérisée en ce que** l'unité (4) de secours et l'unité (5) d'activation sont présentes ou réalisées dans un autre, notamment le même, serveur (3) et **en ce que** l'installation comporte le cas échéant une mémoire pour un identificateur ou une adresse du serveur (3) à activer dans le cas d'une erreur.

13. Installation selon l'une des revendications 6 à 12, **caractérisée en ce que** le décalage (Δt) est compris entre 2 secondes et 15 minutes et notamment réglable librement par l'utilisateur ou variable de façon aléatoire.
